(19) Europäisches Patentamt
European Patent Office
Office européen des brevets

(11) Numéro de publication: **0 011 517**
**A2**

(12) # DEMANDE DE BREVET EUROPEEN

(21) Numéro de dépôt: **79400676.7**

(22) Date de dépôt: **24.09.79**

(51) Int. Cl.³: **B 01 D 53/34**
C 01 B 17/05

(30) Priorité: **06.10.78 FR 7828590**
**17.08.79 FR 7920830**

(43) Date de publication de la demande:
**28.05.80 Bulletin 80/11**

(84) Etats Contractants Désignés:
**AT BE CH DE FR GB IT NL SE**

(71) Demandeur: **RHONE POULENC INDUSTRIES**
**22, avenue Montaigne**
**F-75008 - Paris(FR)**

(72) Inventeur: **Capitaine, Michel**
**1, rue Claude Monet**
**F-76600 Le Havre(FR)**

(72) Inventeur: **Lescuyer, Jean-Louis**
**55, rue des Cyclamens Saint-Sauveur**
**d'Emalleville F-76110 Goderville(FR)**

(74) Mandataire: **Fabre, Madeleine-France et al,**
**RHONE POULENC Service Brevets Chimie et Polymères**
**B.P.753**
**F-75360 Paris Cedex 08(FR)**

(54) **Procédé et appareillage pour l'élimination de l'hydrogène sulfuré des courants gazeux.**

(57) Le procédé et l'appareillage visent l'élimination en continu de l'hydrogène sulfuré de courants gazeux pouvant contenir de 0,01 ppm à 100 % d'hydrogène sulfuré.

Le procédé consiste à traiter les courants gazeux par une solution aqueuse de chélate métallique, à réoxyder la solution aqueuse de chélate par un gaz contenant de l'oxygène moléculaire, à séparer la phase liquide contenant la solution aqueuse de chélate, à mélanger intimement ladite phase liquide avec un agent d'entrainement du soufre peu ou pas soluble dans l'eau, à séparer par décantation la solution aqueuse de chélate de l'agent d'entrainement contenant le soufre, à recycler la solution aqueuse de chélate purifiée vers la zone de traitement des courants gazeux, à recycler tout ou partie de l'agent d'entrainement vers la zone de mélange intime et à maintenir la concentration en soufre de l'agent d'entrainement de la zone de mélange intime à une valeur inférieure au seuil de saturation en soufre de l'agent d'entrainement.

./...

EP 0 011 517 A2

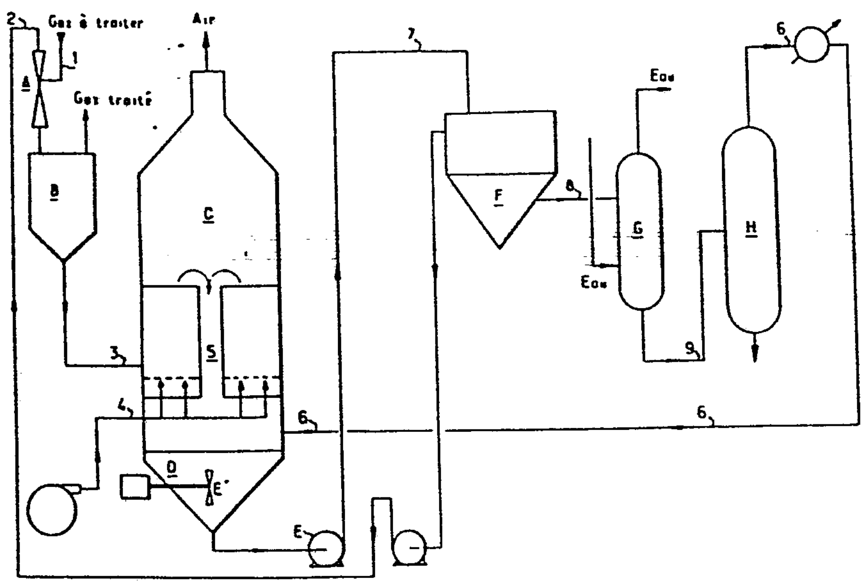


1/1

# PROCEDE ET APPAREILLAGE POUR L'ELIMINATION DE L'HYDROGENE SULFURE DES COURANTS GAZEUX

La présente invention a pour objet un procédé et un appareillage pour l'élimination de l'hydrogène sulfuré des courants gazeux.

Il est connu, d'après le brevet américain n° 3.226.320 d'éliminer l'hydrogène sulfuré des effluents gazeux par dispersion dans les gaz de cheminée, d'une solution d'un chelate d'un métal polyvalent (chrome, cobalt, cuivre, fer plomb, manganèse, mercure, molybdène, nickel, palladium, platine, étain, titane, tungstène et vanadium) avec une substance choisie parmi l'acide éthylènediamine tétracétique, l'acide N-hydroxyéthyléthylènediamine triacétique, l'acétylacétone, le cyclopentadiène, les acides gluconique tartrique et citrique ; les chélates ferriques avec l'acide éthylènediamine tétracétique ou l'acide N-hydroxyéthylènediamine sont préférentiellement utilisés.

Les réactions qui ont lieu au cours de ce procédé peuvent être représentées par le schéma suivant :

1/ $2\ Fe^{+++} + H_2S \longrightarrow 2\ Fe^{++} + 2\ H^{+} + S$

2/ $2\ Fe^{++} + 1/2\ O_2 \longrightarrow 2\ Fe^{+++} + O^{--}$

soit globalement $H_2S + 1/2\ O_2 \longrightarrow S + H_2O$

Le procédé tel que réalisé dans ce brevet américain présente l'inconvénient de ne pas être complètement efficace, d'entraîner de grandes pertes de catalyseur dans l'atmosphère ainsi qu'une pollution par le soufre élementaire.

Il a été proposé, dans la demande française publiée sous le n° 2.147.230, de remédier à ces inconvénients en effectuant :

- un passage à grande vitesse des effluents gazeux et d'oxygène, en dispersion dans une solution de chélate métallique et d'une amine organique très alcaline, dans un dispositif de contact gaz-liquide.

- quasi simultanément, un passage dans un séparateur liquide-gaz, avec séparation de la phase gazeuse traitée et de la phase liquide contenant la solution de chélate

et d'amine et des particules de soufre

- une séparation mécanique de la solution de chélate
- et un recyclage de ladite solution dans le dispositif de mise en contact gaz-liquide

On a constaté qu'un tel procédé ne peut être utilisé industriellement pendant de longues durées de fonctionnement.

En effet, on a constaté que le soufre présent dans la solution de chélate métallique après la phase de traitement est difficile à éliminer avant recyclage de la solution de chélate, ce qui entraîne un colmatage de l'appareil et une dégradation de la solution de chélate par formation de dérivés du fer et du soufre.

Cette difficulté d'élimination du soufre par décantation ou filtration est due au fait que le soufre formé au cours de la réaction, d'abord sous forme de très fines particules, s'agglomère jusqu'à former une solution colloidale.

Il est également connu d'après le brevet français n° 1.130.266 de séparer le soufre en suspension dans une solution aqueuse à l'aide d'un diluant, tel que les hydrocarbures chlorés aromatiques ou aliphatiques, insoluble dans l'eau, de densité supérieure à celle du milieu aqueux tenant le soufre en suspension, afin de retirer le soufre de la phase aqueuse pour le mettre en suspension dans le diluant.

La demanderesse a trouvé un procédé et un appareillage efficaces pour réaliser en continu d'une manière industrielle l'elimination de l'hydrogène sulfuré des courants gazeux.

Le procédé faisant l'objet de l'invention est un procédé d'élimination en continu de l'hydrogène sulfuré des courants gazeux par traitement à l'aide d'une solution aqueuse d'un chélate de métal polyvalent et oxydation à l'aide d'un gaz contenant de l'oxygène moléculaire, séparation de la phase liquide contenant la solution de chélate de métal polyvalent, purification de ladite phase liquide à l'aide d'un agent organique d'entrainement du

soufre peu ou pas soluble dans l'eau et de densité différente de celle de la solution aqueuse de chélate de métal polyvalent et recyclage de la solution aqueuse purifiée de chélate de métal polyvalent, ledit procédé étant caractérisé :

- en ce qu'après traitement desdits courants gazeux à l'aide de ladite solution aqueuse de chélate de métal polyvalent, oxydation à l'aide du gaz contenant de l'oxygène moléculaire et séparation de la phase liquide contenant la solution de chélate de métal polyvalent, ladite phase liquide séparée est mélangée intimement en continu avec ledit agent d'entrainement du soufre, préalablement à une opération de décantation au cours de laquelle la solution aqueuse de chélate de métal polyvalent se sépare de la phase organique contenant le soufre et l'agent d'entraînement.

- en ce que tout ou partie de l'agent d'entrainement de la zone de décantation est recyclé vers la zone de mélange intime.

- et en ce que la concentration en soufre de l'agent d'entrainement de la zone de mélange intime est maintenue à une valeur inférieure à celle correspondant au seuil de saturation en soufre de l'agent d'entrainement.

Un tel procédé peut être utilisé pour désulfurer de nombreux gaz ou mélanges de gaz tels que de l'hydrogène sulfuré, de l'air, du méthane, des gaz naturels ou divers gaz de raffinerie. On sépare du milieu le gaz ou le mélange de gaz désulfuré après la phase de traitement par la solution aqueuse de chélate de métal polyvalent et de préférence avant l'opération de réoxydation de ladite solution, lorsque le gaz ou le mélange de gaz à traiter ne contient pas d'oxygène.

Le gaz ou le mélange de gaz désulfuré est séparé du milieu après la phase de traitement par la solution aqueuse de chélate ou après réoxydation de la solution aqueuse de chélate, lorsque le gaz ou le mélange de gaz à traiter contient de l'oxygène (de l'air par exemple) ; lorsque la

quantité d'oxygène contenue dans le gaz ou le mélange de gaz à traiter est suffisante pour assurer la réoxydation de la solution aqueuse de chélate, le traitement du gaz ou du mélange de gaz par la solution aqueuse de chélate et la réoxydation deladite solution peuvent être réalisés simultanément.

L'étape de traitement des courants gazeux contenant de l'hydrogène sulfuré est bien connue de l'homme de l'art ; elle peut être réalisée à température comprise entre 0 et 80°C et de préférence entre 20 et 60°C sous pression atmosphérique.

Les solutions aqueuses de chélates de métaux polyvalents sont également bien connues de l'homme de l'art.

Les métaux les plus efficaces entrant dans la composition des chélates sont le chrome, le cuivre, le plomb, le manganèse, le mercure, le molybdène, le palladium , le platine, l'étain, le titane, le tungstène, le vanadium et tout particulièrement le cobalt, le nickel et surtout le fer.

L'agent chélatant est de préférence choisi parmi l'acétylacétone, le cyclopentadiène, les acides gluconique, tartrique, et citrique, et tout particulièrement l'acide éthylènediamine tétracétique, l'acide N-hydroxyéthyléthylènediamine triacétique.

La concentration de l'ion métallique dans la solution de chélate n'est pas critique ; plus sa concentration est élevée, plus court devient le temps de contact nécessaire ; des concentrations comprises entre 0,01 % et celles correspondant à une solution saturée, et de préférence entre 1 % et 50 %, peuvent être utilisées.

La quantité de solution de chélate de métal polyvalent à mettre en oeuvre par rapport à la quantité d'hydrogène sulfuré à traiter doit être déterminée expérimentalement; celle-ci est fonction de la concentration de la solution de chélate et de celle des courants gazeux en hydrogène sulfuré. Ainsi, à l'aide de l'appareillage représenté sur le schéma ci-joint, un mélange de gaz contenant de l'oxygène et jusqu'à 10 % d'hydrogène sulfuré, avec un débit de 18 m3/H, est très efficacement traité par une solution aqueuse de chélate ferrique avec l'acide N-hydroxyéthyléthylènediamine triacétique dont la composition est de 19 % de sel trisodique de l'acide N-hydroxyéthyléthylènediamine triacétique, 8,2 % de chlorure ferrique et 72,8 % d'eau, avec un débit de 4 m3/h.

Pour avoir une bonne tenue de la solution de chélate, le milieu de traitement doit être maintenu à un pH compris entre 7 et 10, par addition d'agents alcalins, tels que les hydroxydes ou carbonates de métaux alcalins, ou d'un excès d'acide éthylènediamine tétracétique ou d'acide N-hydroxyéthyléthylènediamine triacétique.

L'étape d'oxydation peut être réalisée dans les mêmes conditions de température et de pression que le traitement par la solution aqueuse de chélate de métal polyvalent.

La quantité stoechiométrique d'oxygène nécessaire à l'oxydation de l'hydrogène sulfuré en soufre élémentaire est de 1/2 partie par partie d'hydrogène sulfuré.

Dans la pratique, quand on utilise de l'air comme gaz contenant de l'oxygène moléculaire, on emploie au moins un excès quadruple de l'air stoechiométriquement requis pour l'oxydation quantitative de l'hydrogène sulfuré en soufre. Ceci est bien connu de l'homme de l'art.

L'étape de mise en mélange intime de la phase liquide séparée après les étapes de traitement et d'oxydation est réalisée à la température d'équilibre de l'installation dans laquelle est réalisée le procédé faisant l'objet de l'invention ; cette température est généralement de l'ordre de 0 à 80°C et de préférence de l'ordre de 20 à 60°C ; cette étape est effectuée sous une agitation suffisante pour réaliser une bonne mise en contact de la solution aqueuse de chélate à purifier et de l'agent d'entrainement du soufre.

Les agents d'entrainement du soufre pouvant être mis en oeuvre pour réaliser le procédé faisant l'objet de l'invention ont de préférence une solubilité dans l'eau inférieure à 1 % à 20°C et une densité comprise entre celle

de la solution aqueuse de chélate et celle du soufre. Ainsi lorsque la densité de la solution aqueuse de chélate est de 1,15, celle de l'agent d'entrainement sera par exemple comprise entre 1,16 et 2.

Parmi les agents d'entrainement du soufre préférentiellement mis en oeuvre, on peut citer les hydrocarbures chlorés figurant dans le tableau suivant ainsi que leurs mélanges.

| Agents d'entrainement | Densité | Solubilité dans l'eau |
|---|---|---|
| Dichloréthane-1,2 | $d^{20}$ = 1,257 | 0,9 % à 0°C<br>0,869 % à 20°C |
| Tétrachloréthane | $d^{20}$ = 1,6 | 0,29 % à 20°C |
| Trichloréthylène | $d^{25}$ = 1,455 | 0,1 % à 25°C |
| Tétrachloréthylène | $d^{15}$ = 1,624 | 0,02 % à 20°C |
| Trichloropropane-1,2,3 | $d^{15}$ = 1,417 | insoluble |
| Orthodichlorobenzène | $d^{20}$ = 1,305 | insoluble |
| Métadichlorobenzène | $d^{20}$ = 1,298 | insoluble |
| Trichloropropane-1,1,2 | $d^{20}$ = 1,343 | insoluble |
| Trichlorobenzène | $d^{20}$ = 1,45-1,46 | insoluble |

L'étape de décantation est de préférence effectuée à la température d'équilibre de l'installation c'est-à-dire entre 0 et 80°C, et de préférence entre 20 et 60°C.

La quantité d'agent d'entrainement à mettre en oeuvre est au moins égale à 2 % du volume de la solution aqueuse de chélate ; cette quantité est déterminée expérimentalement en fonction du temps de séparation de la phase aqueuse contenant le chélate et de la phase organique contenant le soufre. Cette quantité d'agent d'entrainement est mise en oeuvre avec un débit déterminé expérimentalement en fonction du débit d'$H_2S$ des effluents à traiter.

On entend par "seuil de saturation en soufre de

l'agent d'entrainement", la quantité maximale de soufre pouvant être dissoute dans l'agent d'entrainement à sa température d'utilisation.

Le tableau ci-dessous indique la solubilité du soufre dans différents agents d'entrainement.

| Agents d'entrainement | solubilité du soufre dans l'agent |
|---|---|
| Dichloréthane-1,2 | 0,95 % à 25°C |
| Tétrachloréthane | 1 % à 25°C |
| Trichloréthylène | 2,25 % à 25°C |
| Tétrachloréthylène | 2,5 % à 25°C |
| Trichloropropane-1,2,3 | 0,5 % à 25°C |
| Orthodichlorobenzène | 0,5 % à 80°C |
| Métadichlorobenzène | 0,5 % à 80°C |
| Trichloropropane-1,1,2 | 0,5 % à 25°C |
| Trichlorobenzène | 2,6 % à 35°C |

Plusieurs modes de réalisation peuvent être utilisés pour maintenir la concentration en soufre dans l'agent d'entrainement de la zone de mélange intime à une valeur inférieure à celle correspondant au seuil de saturation.

Un premier mode consiste à faire subir à la phase organique de la zone de décantation, une opération de séparation du soufre et de l'agent d'entrainement selon les méthodes classiques de séparation telles que cristallisation du soufre ou évaporation de l'agent d'entrainement, et à recycler l'agent d'entrainement désaturé vers la zone de mélange intime.

Un deuxième mode consiste à introduire dans la zone de mélange intime une certaine quantité d'agent d'entrainement "frais", ladite quantité étant telle que la concentration en soufre de l'agent d'entrainement dans la zone de mélange intime soit inférieure à celle correspondant au seuil de saturation de l'agent d'entrainement en soufre, et à retirer de la zone de décantation la quantité correspondante d'agent d'entrainement usagé.

Ces deux modes de réalisation sont de préférence effectués en continu. Ils peuvent toutefois être réalisés en discontinu, par exemple lorsque les quantités de soufre à éliminer et le volume de l'agent d'entrainement présent sont tels que le seuil de saturation en soufre de l'agent d'entrainement n'est atteint que très lentement.

La présente invention a également pour objet l'appareillage permettant de réaliser le procédé décrit ci-dessus.

L'appareillage faisant l'objet de l'invention est constitué :

- d'une 1ère zone de contact gaz-liquide dans laquelle a lieu le contact des courants gazeux à désulfurer et de la solution aqueuse de chélate de métal polyvalent.
- d'un moyen pour évacuer le gaz ou le mélange de gaz traité
- d'une deuxième zone de contact gaz-liquide dans laquelle a lieu le contact de la solution aqueuse de chélate à réoxyder et d'un gaz contenant de l'oxygène moléculaire
- d'un moyen pour séparer la solution aqueuse de chélate réoxydée etla phase gazeuse
- d'une zone de décantation dans laquelle la solution aqueuse de chélate réoxydée est séparée du soufre qu'elle contient par l'intermédiaire d'un agent d'entrainement du soufre peu ou pas soluble dans l'eau et de densité différente de celle de la solution aqueuse de chélate
- d'un moyen pour recycler la solution aqueuse de chélate purifiée de la zone de décantation vers la 1ère zone de contact gaz-liquide

ledit appareillage <u>étant caractérisé en ce qu'il comprend en outre</u> :

- une zone de mise en mélange intime dans laquelle est effectué le mélange intime de la solution aqueuse de chélate réoxydée et d'un agent d'entrainement du soufre peu ou pas soluble dans l'eau et de densité différente de celle de la solution aqueuse de chélate, ladite zone de mise en mélange intime étant munie d'un moyen d'agitation

et étant située entre la 2ème zone de contact gaz-liquide et la zone de décantation.

- un moyen pour recycler tout ou partie dudit agent d'entrainement du soufre de la zone de décantation vers la zone de mise en mélange intime.

- et un moyen pour maintenir la concentration en soufre de l'agent d'entrainement de la zone de mélange intime à une valeur inférieure à celle correspondant au seuil de saturation en soufre de l'agent d'entrainement.

Le schéma ci-joint représente un appareillage convenant tout particulièrement pour désulfurer industriellement des courants gazeux quelconques.

Ledit appareillage est constitué :

- d'un dispositif de contact gaz-liquide (A) tel qu'un éjecteur, contacteur...dans lequel sont introduits le courant gazeux à traiter par l'intermédiaire du circuit (1) et la solution de chélate métallique par l'intérmédiaire du circuit (2)

- d'un séparateur gaz-liquide (B) communiquant avec le dispositif de contact (A)

- d'un dispositif de contact gaz-liquide (C) tel qu'une colonne...dans lequel est déversée la phase liquide issue du séparateur (B) par l'intermédiaire du circuit (3) et dans lequel est injecté de l'air par l'intermédiaire du circuit (4).

- d'un dispositif de mise en mélange intime interne ou externe au dispositif de contact (C), constitué d'un récipient (D) et d'un moyen d'agitation tel qu'une pompe (E) ou un agitateur (E') du type hélice, turbine...., récipient (D) dans lequel se déverse par l'intermédiaire du circuit (5) la solution aqueuse de chélate réoxydée, et dans lequel est introduit l'agent d'entrainement du soufre par l'intermédiaire du circuit (6).

- d'un décanteur (F) dans lequel se déverse par l'intermédiaire du circuit (7) le mélange intime constitué par la solution aqueuse de chélate chargée de soufre et l'agent d'entrainement du soufre.

- d'un dispositif de lavage (G) dans lequel la phase organique provenant du décanteur (F) est introduite par l'intermédiaire du circuit (8) et lavée à l'eau afin d'éliminer les dernières traces de solution aqueuse de chélate.

- d'un dispositif d'évaporation (H) tel que évaporateur, colonne de distillation....dans lequel l'agent d'entrainement chargé de soufre, issu du dispositif de lavage (G) par l'intermédiaire du circuit (9), est séparé du soufre qu'il contient par vaporisation, éventuellement sous vide.

La solution aqueuse de chélate purifiée est recyclée vers le dispositif de contact gaz-liquide (A) par l'intermédiaire du circuit (2) ; l'agent d'entrainement purifié est recyclé vers le récipient (D) par l'intermédiaire du circuit (6).

Le procédé et l'appareillage faisant l'objet de l'invention sont particulièrement utiles pour traiter des courants gazeux contenant de 0,01 ppm à 100 % d'hydrogène sulfuré.

Les exemples suivants sont donnés à titre indicatif et ne peuvent être considérés comme une limite du domaine et de l'esprit de l'invention.

Exemple 1

L'appareillage mis en oeuvre pour réaliser cet exemple est constitué en particulier :

- d'un éjecteur à jet de liquide dont les caractéristiques sont les suivantes :
  . débit de gaz aspiré : jusqu'à 1000 m3/h
  . débit de liquide : 160 m3/h
- d'une séparation gaz-liquide de 1,5 m3
- d'une colonne présentant :
  a) un compartiment d'oxydation ayant :
    . une section circulaire de 7 m2
    . un volume utile de 3,5 m3

et muni d'une plaque perforée pour l'injection de l'air, ainsi que d'une cheminée centrale d'évacuation de la solution aqueuse de chélate réoxydée.

b) une zone de mélange intime constituée par :

. le fond de la colonne d'une capacité de 3 m3

. et d'une pompe dont le débit est de 210 m3/h

- d'un bac décanteur de forme cylindro-cônique, dont le volume utile est de 30 m3

- d'une colonne de lavage à garnissage présentant

. un diamètre de 1,2 m

. une hauteur de 2,50 m

. une hauteur de garnissage de 1,50 m ,pour éliminer les traces de solution de chélate.

- d'un échangeur horizontal de température pour vaporiser l'agent d'entrainement

- d'une colonne à distiller présentant

. un diamètre de 2 m

. une hauteur de 4,50 m

. une hauteur de garnissage de 3 m permettant de récupérer en tête l'agent d'entrainement purifié et en fond le soufre qui peut être séparé des traces d'agent d'entrainement qu'il contient par stripping à la vapeur par exemple.

La solution aqueuse de chélate de métal polyvalent mise en oeuvre a la composition suivante (rapportée à 1 tonne de solution) :

. 110 kg de sulfate ferrique hydraté, soit 3 % de $Fe^{+++}$

. 650 kg d'une solution à 40 % dans l'eau de sel trisodique de l'acide N-hydroxyéthyléthylènediamine triacétique, ce qui représente un excès molaire en acide N-hydroxyéthyléthylènediamine triacétique de 40 % par rapport à la quantité stoechiométriquement requise pour complexer le fer ferrique,

. 240 kg d'eau

Cette solution présente une densité de 1,25 à 25°C.

L'agent d'entrainement mis en oeuvre est le trichlorobenzène.

On traite pendant 7 jours un courant gazeux constitué

de 50 % d'$H_2S$ et de 50 % d'air.

L'opération est réalisée dans les conditions suivantes :

- température d'équilibre : 50°C à pression atmosphérique
- débit de gaz introduit dans l'injecteur : 800 m3/h
- débit de la solution aqueuse de chélate : 160 m3/h
- volume de la solution aqueuse de chélate: 25 m3
- débit de l'air d'oxydation : 3000 Nm3/h
- débit de trichlorobenzène : 50 m3/h
- volume de trichlorobenzène : 20 m3
- débit de trichlorobenzène dans la colonne de lavage : 9 m3/h
- débit d'eau dans la colonne de lavage 300 l/h
- débit de trichlorobenzène dans la colonne à distiller :9 m3/h

Le trichlorobenzène entrant dans les colonnes de lavage et de distillation contient en moyenne 50 g de soufre/kg. Le trichlorobenzène sortant de la colonne de distillation contient environ 0,2 % de soufre/kg. Le soufre récupéré au fond de la colonne contient environ 0,5 % de trichlorobenzène.

La solution aqueuse de chélate est analysée régulièrement pendant l'opération avant d'être recyclée dans l'éjecteur ; les quantités de soufre contenues dans ladite solution figurent au tableau I. Le rendement de l'opération est de 99,9 %.

Un essai comparatif $A_1$ est réalisé d'une manière analogue en supprimant toutefois l'étape de purification de l'agent d'entrainement et en éliminant le soufre présent sous forme de boue dans le décanteur par l'intermédiaire d'une vis.

Un essai comparatif $B_1$ est réalisé en supprimant à la fois l'étape de purification de l'agent d'entrainement et celle de mise en mélange intime.

Les résultats d'une analyse régulière des solutions de chélate figurent au tableau I.

Exemple 2

On met en oeuvre un appareillage semblable à celui décrit à l'exemple 1 en utilisant toutefois :

- une colonne présentant :
  . un volume utile de compartiment d'oxydation de 7 m3 au lieu de 3,5 m3
- une colonne de lavage de 1,7 m de hauteur au lieu de 1,2 m
- une colonne à distiller de 2,8 m de hauteur au lieu de 2 m.

On réalise une opération sur un courant gazeux contenant 100 % d'$H_2S$, à l'aide de la solution aqueuse de chélate et de l'agent d'entrainement décrits à l'exemple 1.

L'opération est réalisée dans les conditions suivantes

- température d'équilibre : 50°C à pression atmosphérique
- débit d'$H_2S$ introduit dans l'éjecteur : 800 m3/h
- débit de la solution aqueuse de chélate : 160 m3/h
- volume de la solution aqueuse de chélate : 30 m3
- débit de l'air d'oxydation : 6000 Nm3/h
- débit de trichlorobenzène : 50 m3/h
- volume de trichlorobenzène 21,5 m3
- débit de trichlorobenzène dans la colonne de lavage : 18 m3/h (avec 50 g de soufre/kg)
- débit d'eau de lavage : 600 l/h
- débit de trichlorobenzène dans la colonne à distiller : 18 m3/h (avec 50 g de soufre/kg)

La solution aqueuse de chélate est analysée régulièrement pendant l'opération avant d'être recyclée dans l'éjecteur ; le résultat de cette analyse figure au tableau II.

Le rendement de l'opération est de 99,9 %.

On réalise comme à l'exemple 1 des essais comparatifs $A_2$ et $B_2$. Les résultats d'analyse régulière des solutions de chélate figurent également au tableau II.

Des résultats comparables à ceux décrits aux exemples 1 et 2 sont obtenus en traitant dans des conditions semblables du méthane ou de l'isobutène pouvant contenir jusqu'à 10 % d'$H_2S$.

Des résultats comparables sont également obtenus en réalisant les opérations décrites aux exemples 1 et 2 avec un agent d'entrainement autre que le trichlorobenzène, par exemple le tétrachloroéthylène, l'ortho- ou le méta-dichlorobenzène....

TABLEAU I

| Temps de traitement | % de soufre en poids | | |
|---|---|---|---|
| | Ex. 1 | Essai A1 | Essai B1 |
| 1 heure | < 0,01 | 0,02 | 0,02 |
| 10 heures | < 0,01 | 0,02 | 0,05 |
| 20 heures | < 0,01 | 0,05 | 0,05 |
| 36 heures | < 0,01 | 0,05 | 0,05 |
| 7 jours | < 0,01 | 0,05 | 0,05 |

TABLEAU II

| Temps de traitement | % de soufre en poids | | |
|---|---|---|---|
| | Ex. 2 | Essai A2 | Essai B2 |
| 1 heure | < 0,01 | 0,02 | 0,05 |
| 5 heures | < 0,01 | 0,05 | 0,1 |
| 20 heures | < 0,01 | 0,1 | 0,2 |
| 7 jours | < 0,01 | 0,2 | |

REVENDICATIONS

1) Procédé d'élimination en continu de l'hydrogène sulfuré de courants gazeux par traitement à l'aide d'une solution aqueuse d'un chélate de métal polyvalent et oxydation à l'aide d'un gaz contenant de l'oxygène moléculaire, séparation de la phase liquide contenant la solution de chélate de métal polyvalent, purification de ladite phase liquide à l'aide d'un agent organique d'entrainement du soufre peu ou pas soluble dans l'eau et de densité différente de celle de la solution aqueuse de chélate de métal polyvalent et recyclage de la solution aqueuse purifiée de chélate de métal polyvalent, ledit procédé étant caractérisé :

- en ce qu'après traitement desdits courants gazeux à l'aide de ladite solution aqueuse de chélate de métal polyvalent, oxydation à l'aide du gaz contenant de l'oxygène moléculaire et séparation de la phase liquide contenant la solution de chélate de métal polyvalent, ladite phase liquide séparée est mélangée intimement avec ledit agent d'entrainement du soufre, préalablement à une opération de décantation au cours de laquelle la solution aqueuse de chélate de métal polyvalent se sépare de la phase organique contenant le soufre et l'agent d'entrainement,

- en ce que tout ou partie de l'agent d'entrainement de la zone de décantation est recyclé vers la zone de mélange intime,

- et en ce que la concentration en soufre de l'agent d'entrainement de la zone de mélange intime est maintenue à une valeur inférieure à celle correspondant au seuil de saturation en soufre, de l'agent d'entrainement du soufre

2) Procédé selon la revendication 1 caractérisé en ce que l'étape de mise en mélange intime de la solution aqueuse de chélate à purifier et de l'agent d'entrainement du soufre est réalisée à une température comprise entre 0 et 80°C.

3) Procédé selon la revendication 2 caractérisé en ce que ladite étape de mise en mélange intime est réalisée

BAD ORIGINAL

à une température comprise entre 20 et 60°C.

4) Procédé selon l'une quelconque des revendications 1 à 3, caractérisé en ce que l'étape de mise en mélange intime et l'étape de décantation sont réalisées en présence d'un hydrocarbure chloré comme agent d'entrainement.

5) Procédé selon la revendication 4, caractérisé en ce que ledit hydrocarbure chloré est choisi parmi le dichloréthane -1,2, le tétrachloréthane, le trichloréthylène, le tétrachloréthylène, le trichloropropane-1,2,3 l'orthodichlorobenzène, le métadichlorobenzène, le trichloropropane-1,1,2 et le trichlorobenzène.

6) Procédé selon l'une quelconque des revendications 1 à 5 caractérisé en ce que le maintien de la concentration en soufre de l'agent d'entrainement de la zone de mélange intime à une valeur inférieure au seuil de saturation, est réalisé par une opération de séparation du soufre et de l'agent d'entrainement avant recyclage de l'agent d'entrainement vers la zone de mélange intime.

7) Procédé selon la revendication 6, caractérisé en ce que le soufre est séparé de l'agent d'entrainement par cristallisation.

8) Procédé selon la revendication 6, caractérisé en ce que l'agent d'entrainement est séparé du soufre par évaporation.

9) Procédé selon l'une quelconque des revendications 1 à 5, caractérisé en ce que le maintien de la concentration en soufre dans l'agent d'entrainement de la zone de mélange intime à une valeur inférieure à celle du seuil de saturation est réalisé par addition d'agent d'entrainement frais dans la zone de mélange intime et soutirage d'agent d'entrainement usagé en quantité équivalente de la zone de décantation.

10) Dispositif de réalisation du procédé faisant l'objet de l'une quelconque des revendications 1 à 9, comprenant :

- une 1ère zone de contact gaz-liquide dans laquelle a lieu le contact des courants gazeux à désulfurer et de la solution aqueuse de chélate de métal polyvalent.

- un moyen d'évacuation du gaz ou du mélange de gaz traité

- une deuxième zone de contact gaz-liquide dans laquelle a lieu le contact de la solution aqueuse de chélate à réoxyder et d'un gaz contenant de l'oxygène moléculaire

- un moyen pour séparer la solution aqueuse de chélate réoxydée et la phase aqueuse

- une zone de décantation dans laquelle la solution aqueuse de chélate réoxydée est séparée du soufre qu'elle contient par l'intermédiaire d'un agent d'entrainement du soufre peu ou pas soluble dans l'eau et de densité différente de celle de la solution aqueuse de chélate

- un moyen pour recycler la solution aqueuse de chélate purifiée de la zone de décantation vers la lère zone de contact gaz-liquide

ledit dispositif étant caractérisé en ce qu'il comprend en outre :

- une zone de mise en mélange intime dans laquelle est effectué le mélange intime de la solution aqueuse de chélate réoxydée et d'un agent d'entrainement du soufre peu ou pas soluble dans l'eau et de densité différente de celle de la solution aqueuse de chélate, ladite zone de mise en mélange intime étant munie d'un moyen d'agitation et étant située entre la 2ème zone de contact gaz-liquide et la zone de décantation,

- et un moyen pour recycler tout ou partie dudit agent d'entrainement du soufre de la zone de décantation vers la zone de mise en mélange intime,

- et un moyen pour maintenir la concentration en soufre de l'agent d'entrainement de la zone de mélange intime à une valeur inférieure à celle correspondant au seuil de saturation en soufre de l'agent d'entrainement.

11) Dispositif selon la revendication 10 caractérisé en ce que ledit moyen pour maintenir la concentration en soufre de l'agent d'entrainement de la zone de mélange intime à une valeur inférieure au seuil de saturation est constitué par une zone de séparation du soufre et de l'agent d'entrainement située entre la zone de décantation et la zone de mélange intime.

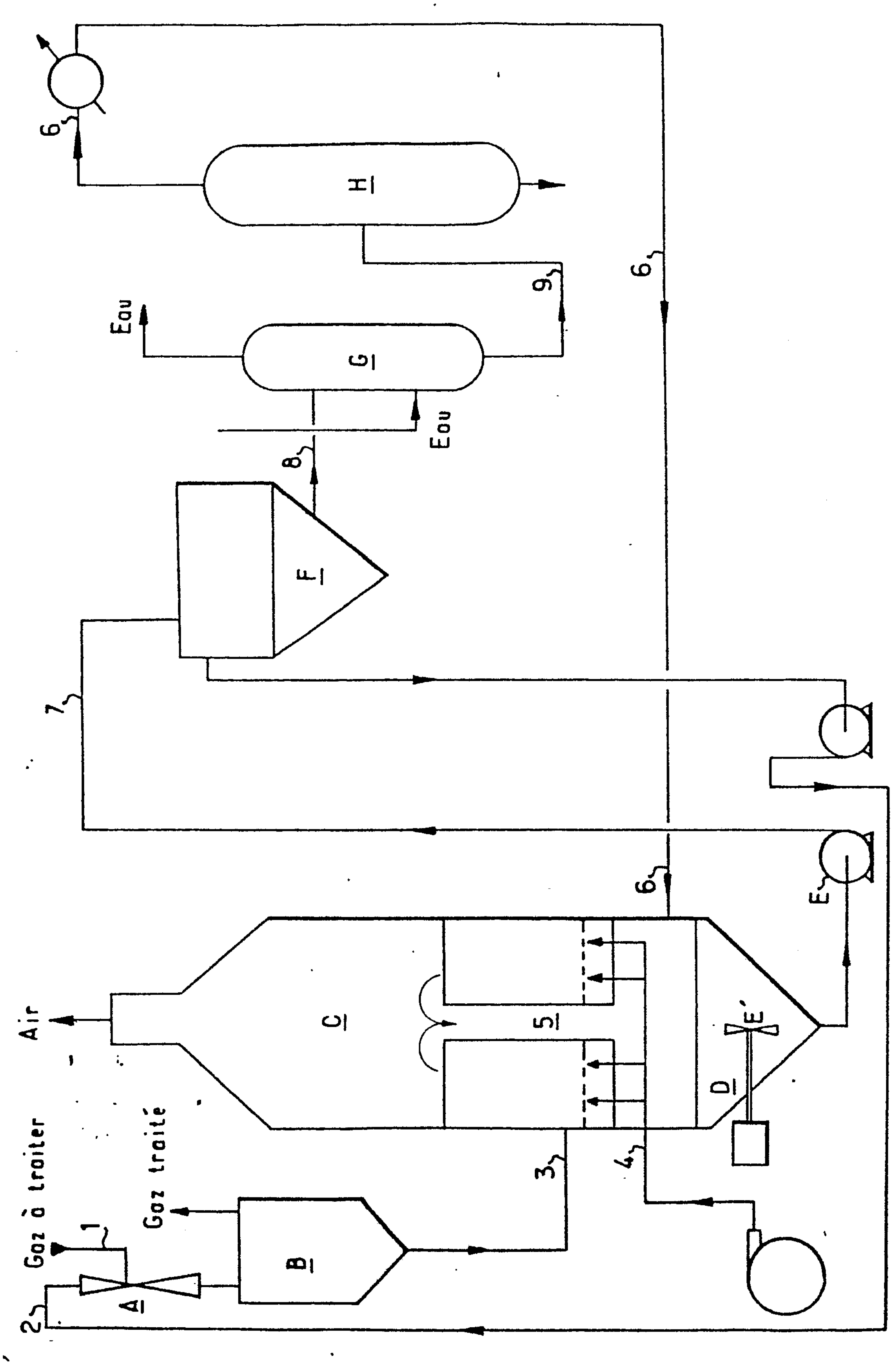
Gaz à traiter
Gaz traité
Air
Eau
Eau
A
B
C
D
E
E'
F
G
H
1
2
3
4
5
6
6
6
7
8
9